# EUROPÄISCHE PATENTSCHRIFT

(11) **EP 1 425 840 B1**
(45) Veröffentlichungstag und Bekanntmachung des Hinweises auf die Patenterteilung: **19.05.2010**
(21) Anmeldenummer: 02760505.4
(22) Anmeldetag: 09.09.2002
(51) Int. Cl.: H02K 7/18, H02K 7/08, F03D 9/00

(54) **WINDKRAFTSTROMGENERATOR**
WIND POWER CURRENT GENERATOR
GENERATRICE DE COURANT A ENERGIE EOLIENNE

(30) Priorität: 13.09.2001 IT BZ20010043
(43) Veröffentlichungstag der Anmeldung: 09.06.2004
(73) Patentinhaber: WILIC S.ÀR.L., 1724 Luxembourg (LU)
(72) Erfinder: CASAZZA, Matteo, I-39049 Vipiteno (IT); MAIR, Andreas, I-39040 Val di Vizze (IT); PABST, Otto, I-39037 Rio Pusteria (IT)
(74) Vertreter: Boggio, Luigi
(86) Internationale Anmeldenummer: PCT/IB2002/003741
(87) Internationale Veröffentlichungsnummer: WO 2003/023943

(56) Entgegenhaltungen:
- WO-A-01/21956
- DE-A- 3 638 129
- DE-A- 10 000 370
- DE-A- 19 711 869
- DE-U- 20 102 029
- US-B1- 6 278 197

## Beschreibung

Die vorliegende Erfindung bezieht sich auf einen Windkraftstromgenerator, gemäß dem Oberbegriff des Anspruchs 1.

Wie aus der internationalen Anmeldung WO 01/29413 bekannt, bestehen sogenannte Vielpol-Windkraftgeneratoren, A1, bei denen ein durch den Wind betätigter Rotor einem Stromgenerator zugeordnet ist, der am oberen Ende eines Turms drehbar gelagert ist. Der Rotor ist am Ende einer Achse befestigt, die in zwei Lagern drehbar angeordnet ist, die ihrerseits innerhalb eines Gehäuses aufgenommen sind, das den Stator des Stromgenerators umfasst. Der Rotor selbst besteht aus einer Vielzahl von, den Ring tragenden Armen, an dem die Elektromagneten befestigt sind, die bei Drehung des Rotors den Wicklungen zu gegenüberliegen kommen, die ihrerseits innerhalb des Gehäuses untergebracht sind.

Es ist zu bemerken, dass bei dieser Anmeldung ein Ringstromgenerator beschrieben wird, bei dem die Rotorenwelle durch Lager drehbar abgestützt ist, die sich im Gehäuse strahlenförmig erstrecken. Andererseits wirkt die Welle des durch die Windkraft betätigten Rotors selbst auch als Rotorenwelle des Generators, der mit Armen versehen ist, die radial angeordnet und dazu ausgelegt sind, den Ring mit den Elektromagneten zu lagern.

Es ist anzumerken, dass in einem so ausgebildeten Generator kein Durchgang zwischen dem Inneren des Turms und dem Inneren der Blätter besteht, die sich von der Rotorennabe weg erstrecken. ES ist daher die Innenbelüftung der Rotorenblätter und insbesondere eine Enteisungswirkung der Blätter selbst schwierig gestaltet.

Die Konstruktion des Windkraftgenerators bekannter Art ist überdies kompliziert bezüglich der Lagerung des Rotors innerhalb des Statorenkörpers und es ist der Zugang zum Rotor wegen der Lagerung der Rotorenwelle selbst schwierig.

In der deutschen Patentschrift DE 44 02 184 ist hingegen ein Vielpol-Synchrongenerator für Horizontalaohsenwindkraftanlagen beschrieben, bei denen der Generator durch eine einzige Konstruktioaseinheit gebildet ist, die aus einem Stator und einem Rotor besteht, -die miteinander über eine fliegende innerhalb des Generators vorgesehene Lagerung verbunden sind-, die Drehbewegung des Rotors abstützt und die extern eingeleiteten Kräfte und Momente aufnimmt. Im vorgeschlagenen Fall zeigt sich eine sehr komplexe Struktur des Rotors, da die beiden Flächen des Rotors und des Stators mit einem beträchtlichen Abstand von den Wälzlagern des Rotors gegenüberliegend ausgelegt werden müssen.
Offenlegungsschrift DE 197 11 869 A1 beschreibt einen Windkraftstromgenerator gemäß dem Oberbegriff des Anspruchs 1. Dieser Windkraftstromgenerator gewährleistet keine Zugangsmöglichkeit an den verschiedenen Bestandteilen des Generators und hat eine schwache Struktur.

Die Aufgabe der vorliegenden Erfindung liegt daher darin, die Mängel der Windkraftgeneratoren herkömmlicher Art zu vermeiden und einen Windkraftstromgenerator vorzuschlagen, bei dem ein Höchstmaß an Belüftungsmöglichkeiten sichergestellt ist, gegeben durch eine große Zugangsmöglichkeit an den verschiedenen Bestandteilen des Generators, wobei gleichzeitig eine hohe Steifigkeit im Aufbau gewährleistet sein soll.

Diese und weitere Aufgaben werden in einem Windkraftstromgenerator durch den kennzeichnenden Teil des Anspruchs 1 gelöst.

In einer bevorzugten Ausführungsform, weist der hohle und mehrpolige Synchrongenerator mit Permanentmagneten Außenwicklungen auf. In diesem Fall sieht der mehrpolige und synchrone Generator mit Permanentmagneten und übersetzungslos ein Rohrelement vor, das gleichzeitig als Welle für die Aufnahme der Lager und als Aufbau zur Verankerung von Magnetkörpern dient, wobei so die Arme zwischen Welle und den die Permanentmagneten tragenden Ring vermieden werden.

Der Generator ist integrierender Bestandteil des Tragaufbaues und die Lasten werden unmittelbar von der Nabe auf die Rotorenwelle des Generators übertragen, der sie in den Statorenkörper über zwei Lager einleitet, die am Anfang und am Ende der elektrischen Maschine angeordnet sind.

Die sich daraus ergebende Hohlkonstruktion erlaubt den Zugang zum Vorderteil der Gondel, wobei die Wartungs- und Instandhaltungsarbeiten der übernommenen Untersysteme erleichtert werden. Das System erlaubt überdies, die Montage der Nabe von innen durchzuführen.

Die Hohlkonstruktion macht überdies möglich, die von der im Turm aufgenommenen Kraftelektronik abgegebene Wärme und den Anteil jener, die vom Generator selbst freigegeben wird, dazu auszunützen, um Warmluft in die Nabe zu leiten und von dort in die Rotorenblätter, wobei so ein besonders effizientes Enteisungssystem hergestellt wird. Die Erwärmung der Rotorenblätter macht im Betrieb keine Zufuhr von Außenenergie erforderlich, wobei auf einfache Art und Weise die vom Generator und von der Kraftelektronik selbst abgegebene Wärme Verwendung findet.

Die Hohlkonstruktion des Generators, eingefügt in jene des Restes der Gondel, erlaubt innerhalb derselben die elektrischen und elektronischen Untersysteme aufzunehmen, wobei so ein ausgezeichneter Blitzschutz erhalten wird, der sich auf dem Prinzip des Käfigs von Faraday gründet.

In einer Variante weist der hohle und mehrpolige Synchrongenerator mit Permanentmagneten Innenwicklungen auf. Indem das Konzept der bevorzugten Ausführungsform umgekehrt wird, ist es möglich eine Maschine auszuführen, die die Statoreneinheit innen und den Rotor außen aufweist. Die Magnete sind auf der Innenfläche des Rotors und die Wicklungen auf der Außenfläche der Rotorwelle angebracht.

Die Vorteile einer solchen Lösung sind eine größere spezifische Leistung, die Möglichkeit, die gesamte vom Generator freigegebene Wärme für das Enteisungssystem zu verwenden, und eine Vereinfachung in der Positionierung der Kraftstromkabel, die für die Leitung des elektrischen Stromes vom Generator zum Turm notwendig sind.

In einer weiteren Variante erstreckt sich der Rohrabschnitt des Stators glockenartig in Richtung der Nabe, dessen Glockenboden eine mittige, kreisförmige Öffnung aufweist, während der Rohrabschnitt des Rotors innerhalb des Rohrabschnittes des Stators gleichfalls glockenförmig konzentrisch zur Glockenform des Stators verläuft und dessen Glockenboden gleichfalls eine mittige Öffnung aufweist, die sich in einem Rohransatz fortsetzt, der in die Öffnung des Glockenbodens des Stators unter Ausbildung einer Aufnahme für ein Wälzlager hineinreicht und mit dem Außenrand die Nabe trägt.

In einer bevorzugten Ausführungsform ist das Wälzlager ein Kegelrollenlager mit Doppellaufkranz.

Zweckmäßiger Weise ist der Rohrabschnitt des Rotors an seinem zum Tragrahmen gerichteten Ende mit einem Bremslagerstruktur und mit einer Feststellbremse.

Bei dieser Lösung wurde daher das hintere Lager weggelassen und das vordere Lager wurde durch ein einzelnes speziales Lager zum Beispiel ein Kegelrollenlager mit Doppellaufkranz ersetzt, das kleineren Durchmessers ist und in einer zweckmäßigen Verengung im vorderen Teil des Statorenaufbaues aufgenommen ist, die durch ein verstärkendes, sandwichartiges Toruselement verwirklicht wird, das nur teilweise die Zugänglichkeit zu Nabe herabsetzt.

Die Verwendung eines einzigen Kegelrollenlagers mit Doppellaufkranz bietet gegenüber den zuerst beschriebenen Varianten mit zwei Lagern folgende Vorteile:
1.Vereinfachung der Montagetechnik des Generators (einseitige Aufnahme des Lagers)
2.Beseitigung von gefährlichen Wirbelströmen im Generator, die durch Bildung von zeitweiligen Sromkreisen möglich sind, die sich zwischen Statorwand, Rotorwand und Wälzkörpern der an den Enden des aktiven Teils (Wicklungen) angeordneten Lager aufbauen.
3.Vereinfachung der Einstellabläufe des Lagers (die Kegelrollen müssen vorgespannt sein: die Version mit zwei Lagern an den Enden des Generators weist daher Schwierigkeiten in der Ausführung auf, die mit den Bautoleranzen und den Warmverformungen zusammenhängen).
4.Ein einziges System von Dichtungen und Schmierung, das sich auf den vorderen Bereich des Generators konzentriert.
5.Die verwendete Typologie des Lagers bietet überdies eine hohe Wälzpräzision (Beseitigung der Spiele dank der Vorspannung) und eine niedrigen Wälzwiderstand (fühlbare Zunahme der Generatorproduktivität) an

Weitere Merkmale und Einzelheiten gehen aus den Ansprüchen und der Beschreibung eines Stromgenerators, betätigt durch Windenergie, in seinen bevorzugten, in den beigefügten Zeichnungen dargestellten Ausführungsformen hervor. Es zeigen,
- Figur 1: eine Ansicht im Schnitt längs einer vertikalen Axialebene eines Stromgenerators, betätigt durch Windenergie, gemäß der Erfindung,
- Figur 2: einen Schnitt wie Figur 1 einer Variante.

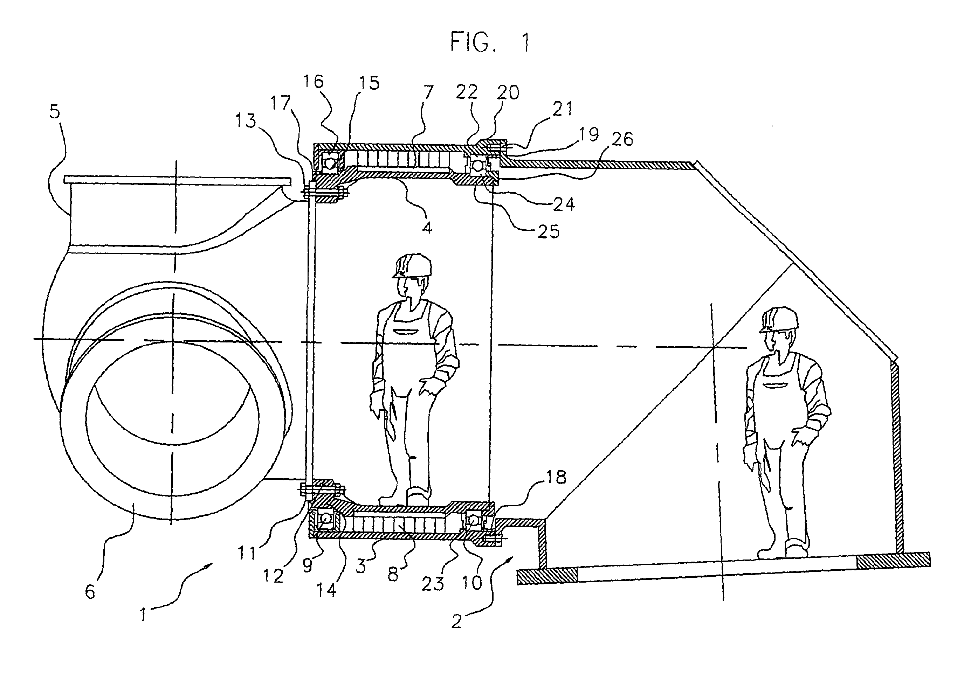

In der Figur 1 ist mit der Bezugsziffer 1 im allgemeinen ein Windkraftgenerator angegeben. Dieser ist über einen hohlen Übergang 2 am oberen Ende eines nicht weiter dargestellten Turmes angebracht. Der Windkraftgenerator 1 besteht aus einem Stator 3 und einem Rotor 4. Der Rotor 4 ist auf bekannte Art und Weise mit einer Nabe 5 verbunden, mit der, im vorliegenden Fall drei, nicht gezeigte Hohlblätter verbunden sind, die an Flanschen 6 der Nabe 5 befestigt sind. Der Rotor 4 ist durch einen Rohrabschnitt gebildet, in dessen Außenmantel Permanentmagnete 7 eingelassen sind, die Wicklungen 8 zum Gegenüberliegen kommen, die an der Innenfläche eines Rohrabschnittes des Stators 3 befestigt sind. Im Bereich der Enden des Rohrabschnittes des Stators 3 sind jeweils ein Wälzlager 9 und 10 angeordnet, die den Rohrabschnitt des Rotors 4 drehbar tragen. Von den beiden Wälzlagern 9 und 10 muss mindestens eines ein Drucklager sein. Beide sind derart angeordnet, dass zwischen ihnen die Permanentmagnete 7 und die Wicklungen gehalten werden.

Die Nabe 5 ist an einem der Ende des Rohrabschnittes des Rotors 4 über seinen Flansch 11 befestigt, der an einem Ringbund 12 des Rohrabschnittes 4 mittels der Schraubbolzen 13 angesetzt ist.

An der zur Nabe 5 gerichteten Seite weist der Rohrabschnitt des Rotors 4 eine Vertiefung 14 an seiner Außenfläche derart auf, dass diese den Innenring 15 des Wälzlagers 9 aufnehmen kann, während der Außenring 16 desselben Rohrlagers auf der Außenfläche des Rohrabschnittes des Stators 3 frei gleiten kann. Das Wälzlager 9 ist überdies zwischen der Vertiefung 14 und im abgewinkelten Ringelement 17 gehalten.

In dem der Nabe 5 abgewandten Ende ist der Rohrabschnitt des Stators 3 mit einem Flansch 14 des Übergangs 2 verbunden, der mit einem im Rohrabschnitt des Stators 3 verdicktem Rand 20 über Schrauben 21 aufgeschraubt ist. Der Außenring 22 im Wälzlager 10 ist durch einen Radialsteg 23 des Statorenabschnittes 3 und durch einen Abstandhalter 18 in Position gehalten, der unmittelbar am Flansch 19 aufliegt, während der Innenring 24 desselben Wälzlagers 10 auf einem in die Außenfläche des Rohrabschnittes des Rotors 4 rückspringenden Gürtel 25 Aufnahme findet. Der Innenring 24 ist überdies durch ein im Querschnitt L-förmiges Winkelelement 26 in Position gehalten.

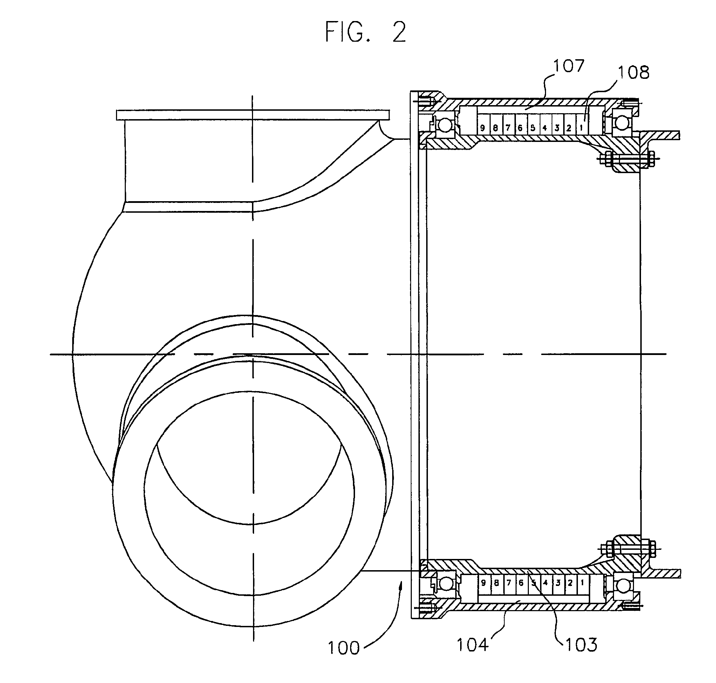

In Figur 2 ist in einer ersten Variante ein Windkraftgenerator 100 aus einem Rotor 104 zusammengesetzt, der sich außerhalb eines Stators 3 befindet. Der Rotor 4 wird durch den Stator 3 auf ähnliche Weise gelagert, wie unter Bezugnahme auf Figur 1 beschrieben. In diesem Fall befinden sich die Wicklungen 108 auf der Außenfläche des Stators 103, während die Permanentmagneten 107 sich in der Innenfläche des Rotors 104 befinden.

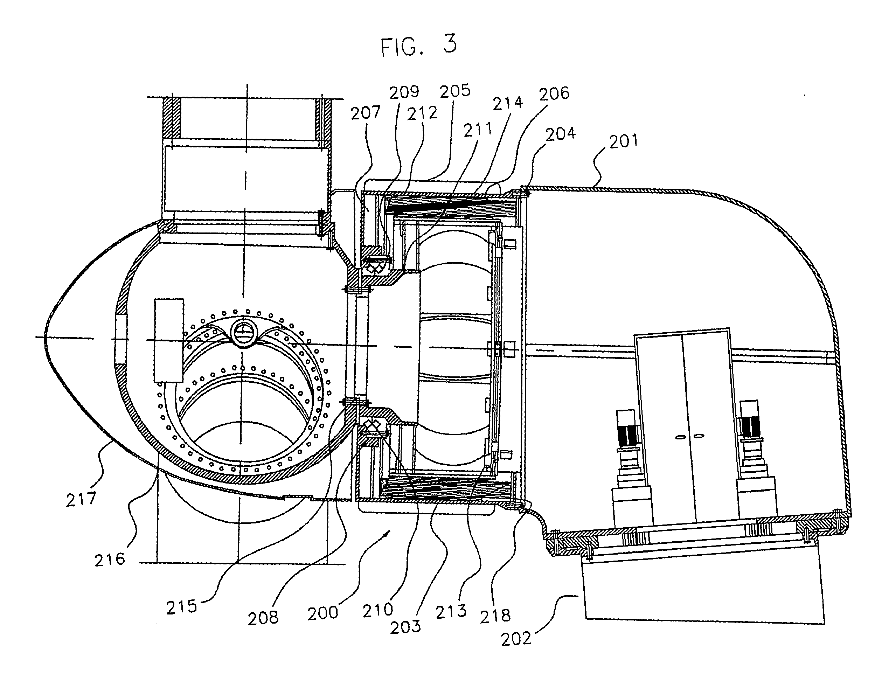

In der bevorzugten Ausführungsform nach Figur 3 ist der erfindungsgemäße Windkraftstromgenerator insgesamt mit der Bezugsziffer 200 angegeben. Er ist an einem Rahmen 201 am oberen Ende eines nur eines teilweise angeführten Turms 202 befestigt. Auch im diesem Fall weist der windkraftstromgenerator 200 einen Stator auf, der durch einen Rohrabschnitt 203 gebildet ist, dessen ein Ende über eine Schraubverbindung 204 am Rahmen 201 befestigt ist.

Aussen erstrecken sich vom Rohrabschnitt 203 radiale Kühlrippen 205, während innen Statorwicklungen 206 aufgenommen sind. An der zur Schraubverbindung 204 abgewandten Seite endet der Rohrabschnitt 203 glockenförmig mit einem torusförmigen sandwichartigen Boden 207, der in seiner Öffnung einen Aussenkranz 208 trägt, der mit einem Innenkranz 209 ein Kegelrollenlager 210 bildet um auskragend einen Rohransatz 211 eines torusförmigen Bodens 212 eines Rohrabschnittes 213 zu lagern, der zum Rohrabschnitt 213 konzentrisch liegt und auf seiner Aussenfläche Permanentmagneten 214 des Rotors trägt, die den Wicklungen 206 des Stators gegenüberliegen.

Der Rohrabschnitt 213 ist über eine Schraubverbindung 215 mit einer Nabe 216 verbunden, die eine Verkleidung bzw. eine Haube 217 aufweist.

Auf der zum Rohransatz 211 abgewandten Seite 214 ist der Rohrabschnitt 213 mit seinem Ende zu einer Bremstragkonstruktion 218 gerichtet, die fähig ist, den Rohrabschnitt 213 des Rotors bzw die Bewegung der Flügel zu bremsen.

## Patentansprüche

1. Windkraftstromgenerator umfassend, eine Lagerung (2), einen der an festliegenden Stator (3), einen gegenüber dem Stator (3) drehbaren Rotor (4), eine mit dem Rotor (4) verbundene Nabe (5) und mindestens zwei Blätter, die sich radial von der Nabe (5) weg erstrecken, wobei der Stator (3) und der Rotor (4) durch zueinander konzentrische Rohrabschnitte gebildet werden, auf deren gegenüberliegenden Flächen jeweils Permanentmagnete (7) und Wicklungen (8) angeordnet sind und die sich über die Magnete und die Wicklungen hinaus erstrecken, um zwischen sich mindestens einseitig ein Lager auf zunehmen, **dadurch gekennzeichnet, dass** die Nabe (5) an einem der Ende des Rohrabschnittes des Rotors (4) über einen Flansch (11) befestigt ist daß in dem der Nabe (5) abgewandten Ende der Rohrabschnitt des Stators (3) mit einem Flansch (14) den Lagerung (2) verbunden ist wobei die Lagerung (2) wie ein hohlen Übergang ausgebildet ist und das Lager ein wälzlager ist.

2. Generator nach Anspruch 1, **dadurch gekennzeichnet, dass** an jedem Ende der Rohrabschnitte jeweils ein Wälzlager (9,10) vorgesehen ist, zwischen welchem und dem anderen die Permanentmagneten und die wicklungen liegen.

3. Generator nach Anspruch 1, **dadurch gekennzeichnet, dass** der Stator sich gegenüber dem Rotor (4) innen befindet.

4. Generator nach Anspruch 1, **dadurch gekennzeichnet, dass** der Stator (3) sich ausserhalb des Rotors (4) befindet.

5. Generator nach Anspruch 1 bis 3, **dadurch gekennzeichnet, dass** die Permanentmagneten sich am Rotor befinden.

6. Generator nach den vorstehenden Ansprüchen, **dadurch gekennzeichnet, dass** mindestens eines der Lager ein Druckwälzlager ist.

7. Generator nach den vorstehenden Ansprüchen, **dadurch gekennzeichnet, dass** das Innere des Generators einen Durchgang vom Inneren eines Tragturms zur Nabe und innerhalb der Blätter bildet.

8. Generator nach den vorstehenden Ansprüchen, **dadurch gekennzeichnet, dass** die Hohlkonstruktion durch den Kamineffekt die Führung der Warmluft in Richtung der Blätter begünstigt, wobei eine bessere Ausbeutung der durch die verschiedenen elektrischen und elektronischen, eingebauten Bestandteile erzeugten Wärmeverluste ermöglicht.

9. Generator nach Anspruch 1, **dadurch gekennzeichnet, dass** nur ein einziges Wälzlager (210) vorgesehen ist.

10. Generators nach Anspruch 1 und 9, **dadurch gekennzeichnet, dass** das Wälzlager ein Kegelrollenlager (210) ist.

11. Generator nach Anspruch 1, 9 und 10, **dadurch gekennzeichnet, daß** sich das Rohrabschnitt (203) des Stators glockenartig in Richtung der Nabe (216) erstreckt, dessen Glockenboden eine mittige, kreisförmige Öffnung aufweist, während der Rohrabschnitt (213) des Rotors innerhalb des Rohrabschnittes (203) des Stators gleichfalls glockenförmig konzentrisch zur Glockenform des Stators verläuft und dessen Glockenboden gleichfalls eine mittige Öffnung aufweist, die sich in einem Rohransatz (211) fortsetzt, der in die Öffnung des Glockenbodens des Stators unter Ausbildung einer Aufnahme für das Wälzlager (210) hineinreicht und mit dem Außenrand die Nabe (216) trägt.

12. Generator nach Anspruch 1, 9, 10 und 11, **dadurch gekennzeichnet, dass** das Wälzlager ein Kegelrollenlager mit Doppellaufkranz ist.

13. Generator nach Anspruch 1, 9, 10 und 11, **dadurch gekennzeichnet, dass** der Rohrabschnitt (213) des Rotors an seinem zum Tragrahmen gerichteten Ende mit einem Bremslagerstruktur und mit einer Feststellbremse versehen ist.

## Claims

1. Wind power current generator comprising a mounting arrangement (2), a stator (3) fixed thereto, a rotor (4) which is rotatable in relation to said stator (3), a hub (5) which is connected to said rotor (4), and at least two blades which extend away radially from the hub (5), wherein the stator (3) and rotor (4) are formed by tubular sections which are concentric with one another, on the opposed faces of which permanent magnets (7) and windings (8) are arranged in each case, and which extend beyond said magnets and windings so as to receive a bearing between them, at least on one side, **characterised in that** the hub (5) is fastened to one of the ends of the tubular section of the rotor (4) via a flange (11), and **in that** the tubular section of the stator (3) is connected, **in that** end which faces away from the hub (5), to a flange (14) on the mounting arrangement (2), said mounting arrangement (2) being constructed as a hollow transition and the bearing being a rolling bearing.

2. Generator according to claim 1, **characterised in that** a rolling bearing (9, 10) is provided, in each case, at each end of the tubular sections, between which roller bearings the permanent magnets and windings are located.

3. Generator according to claim 1, **characterised in that** the stator is located internally in relation to the rotor (4).

4. Generator according to claim 1, **characterised in that** the stator (3) is located outside the rotor (4).

5. Generator according to claims 1 to 3, **characterised in that** the permanent magnets are located on the rotor.

6. Generator according to the preceding claims, **characterised in that** at least one of the bearings is a rolling thrust bearing.

7. Generator according to the preceding claims, **characterised in that** the interior of the generator forms a passage from the interior of a supporting tower to the hub and inside the blades.

8. Generator according to the preceding claims, **characterised in that,** because of the chimney effect, the hollow construction favours the guidance of the warm air in the direction of the blades, permitting better exploitation of the heat losses generated by the various electrical and electronic components incorporated.

9. Generator according to claim 1, **characterised in that** only a single rolling bearing (210) is provided.

10. Generator according to claims 1 and 9, **characterised in that** the rolling bearing is a tapered-roller bearing (210).

11. Generator according to claims 1, 9 and 10, **characterised in that** the tubular section (203) of the stator extends in the direction of the hub (216) in a bell-like manner, the bottom of which bell has a central, circular opening, while the tubular section (213) of the rotor runs inside the tubular section (203) of the stator, likewise in a bell-shaped manner and concentrically with the bell shape of the stator, and the bottom of its bell likewise has a central opening which continues within a tubular extension (211) which reaches into the opening in the bottom of the bell of the stator, forming a receptacle for the rolling bearing (210), and carries, with the outer rim, the hub (216).

12. Generator according to claims 1, 9, 10 and 11, **characterised in that** the rolling bearing is a tapered-roller bearing with a double running ring.

13. Generator according to claims 1, 9, 10 and 11, **characterised in that** the tubular section (213) of the rotor is provided, at its end which is directed towards the supporting frame, with a braking bearing structure and an arresting brake.

## Revendications

1. Génératrice de courant à énergie éolienne comprenant une embase (2), un rotor rotatif (4) par rapport au stator (3) sur le stator fixe (3), un moyeu (5) relié au rotor (4) et au moins deux pales, lesquelles s'étendent radialement à partir du moyeu (5), le stator (3) et le rotor (4) étant formés par des segments tubulaires concentriques les uns par rapport aux autres, sur les surfaces situées en vis-à-vis desquels sont respectivement disposés des aimants permanents (7) et des bobinages (8) et lesquels s'étendent au-delà des aimants et des bobinages, afin d'accueillir entre eux sur un côté au moins un palier, **caractérisée en ce que** le moyeu (5) est fixé à l'une des extrémités du segment tubulaire du rotor (4) par l'intermédiaire d'une bride (11), **en ce qu'**à l'extrémité opposée au moyeu (5) le segment tubulaire du stator (3) est relié à une bride (14) de l'embase (2), et l'embase (2) est réalisée à la manière d'une transition creuse et le palier est un palier à roulement.

2. Génératrice selon la revendication 1, **caractérisée en ce qu'**à chaque extrémité des segments tubulaires on prévoit respectivement un palier à roulement (9, 10), entre chacun desquels se situent les aimants permanents et les bobinages.

3. Génératrice selon la revendication 1, **caractérisée en ce que** le stator se trouve à l'intérieur par rapport au rotor (4).

4. Génératrice selon la revendication 1, **caractérisée en ce que** le stator (3) se trouve en-dehors du rotor (4).

5. Génératrice selon les revendications 1 à 3, **caractérisée en ce que** les aimants permanents se trouvent sur le rotor.

6. Génératrice selon l'une quelconque des revendications précédentes, **caractérisée en ce que** au moins l'un des paliers est un palier à roulement de butée.

7. Génératrice selon l'une quelconque des revendications précédentes, **caractérisée en ce que** l'intérieur de la génératrice forme un passage depuis l'intérieur d'un pylône de support jusqu'au moyeu et à l'intérieur des pales.

8. Génératrice selon l'une quelconque des revendications précédentes, **caractérisée en ce que** la construction creuse favorise, grâce à l'effet cheminée, le guidage de l'air chaud en direction des pales, moyennant quoi une meilleure exploitation des pertes thermiques générées en raison des différents composants électriques et électroniques intégrés est possible.

9. Génératrice selon la revendication 1, **caractérisée en ce que** seulement un unique palier à roulement (210) est prévu.

10. Génératrice selon les revendications 1 et 9, **caractérisée en ce que** le palier à roulement est un palier à rouleaux coniques (210).

11. Génératrice selon les revendications 1, 9 et 10, **caractérisée en ce que** le segment tubulaire (203) du stator s'étend à la manière d'une cloche en direction du moyeu (216), dont le fond de la cloche présente une ouverture circulaire du milieu, alors que le segment tubulaire (213) du rotor s'étend à l'intérieur du segment tubulaire (203) du stator également en forme de cloche et de manière concentrique à la forme en cloche du stator et le fond de la cloche de celui-ci présentant également une ouverture du milieu, laquelle se prolonge dans un manchon de raccord (211) qui s'étend à l'intérieur de l'ouverture du fond de la cloche du stator en formant un logement pour le palier à roulement (210) et qui supporte le moyeu (216) avec le bord extérieur.

12. Génératrice selon les revendications 1, 9, 10 et 11, **caractérisée en ce que** le palier à roulement est un palier à rouleaux coniques avec une surface de roulement double.

13. Génératrice selon les revendications 1, 9, 10 et 11, **caractérisée en ce que** le segment tubulaire (213) du rotor est muni sur son extrémité orientée vers le cadre de support d'une structure de palier de freinage et d'un frein d'arrêt.
